# EUROPEAN PATENT SPECIFICATION

(11) **EP 2 987 659 B1**
(45) Date of publication and mention of the grant of the patent: **31.01.2018**
(21) Application number: 15180939.9
(22) Date of filing: 13.08.2015
(51) Int. Cl.: B60C 23/04

(54) **SYSTEM FOR EXTERNAL ANNUNCIATION OF TIRE PRESSURE**
SYSTEM ZUR EXTERNEN MELDUNG DES REIFENDRUCKS
SYSTÈME D'ANNONCE EXTERNE DE PRESSION DE PNEU

(30) Priority: 18.08.2014 US 201414462377
(43) Date of publication of application: 24.02.2016
(73) Proprietor: Goodrich Corporation, Charlotte, NC 28217-4578 (US)
(72) Inventor: KELLER, Steven, Union, OH Ohio 45322 (US); SUMMERS, Paul L., Troy, OH Ohio 45373 (US)
(74) Representative: Leckey, David Herbert

(56) References cited:
- WO-A1-96/36861
- US-A- 4 517 834
- US-A1- 2004 075 022

## Description

### FIELD OF INVENTION

The present disclosure relates to aircraft landing gear, and, more specifically, to a tire pressure monitoring system for aircraft landing gear.

### BACKGROUND OF THE INVENTION

Aircraft landing gear may have tires designed to run at specific tire pressures. From time to time, ground crews may have to measure the tire pressures from outside of the aircraft. Ground crews may measure the air pressure using a gauge to visit and measure the pressure at every tire on the aircraft. Some tires may be difficult to access as there may be limited clearance around the tires. For example, some aircraft may have only 3 to 4 feet (0.91 to 1.22 m) of clearance between the aircraft and the ground at the locations of under-wing main gear assemblies. Ground crews may have to crawl or roll to access the main wheels. Furthermore, ground crews may have to visit each wheel on the aircraft and spend time to measure each tire pressure. US 2004/0075022 A1, accordingly to the respective preambles of claim 1 and claim 10, desribes a wireless landing gear monitoring system. US 4,517,834 describes the pressure sensing systems. WO 96/36861 describes a pressure sensing valve cap that permits the passage of air.

### SUMMARY OF THE INVENTION

A system for measuring tire pressure on an aircraft includes a first wheel with a first tire pressure. A first tire pressure sensor on the wheel may be configured to output an electronic measurement of the tire pressure. A transmission device may be electrically coupled to the first tire pressure sensor and configured to transmit the first electronic measurement. A hubcap may be on the first wheel with a transmission device mounted to the hubcap. The first transmission device may be an infrared light-emitting diode. An axle telemetry unit may be in electromagnetic communication with the hubcap.

In various embodiments, the system may further include a second wheel with a second tire pressure. A second tire pressure sensor may be on the second wheel to output a second electronic measurement of the second tire pressure. A first hubcap may be at a proximal region of the first wheel, wherein the first hubcap is configured to receive the second electronic measurement of the second tire pressure. The first wheel may be mounted on a nose gear assembly, and the second wheel may be mounted on a main gear assembly. A second hubcap may be at a proximal region of the second wheel. The second hubcap may be configured to receive the first electronic measurement of the first tire pressure. A second transmission device may be configured to transmit the second electronic measurement. The second transmission device may be configured to transmit the first electronic measurement. The first transmission device may be mounted to a nose gear assembly. An infrared capable device may receive the first electronic measurement.

A hubcap for an aircraft may include a coil disposed on a first surface of the hubcap. The hubcap may be configured to receive a tire pressure. A communication interface may be disposed on a second surface of the hubcap and electrically connected to the coil. The communication interface may further comprise an infrared light-emitting diode. The communication interface may comprise a wireless communication interface. The coil may be configured to receive a second tire pressure from a second hubcap. The communication interface may be configured to output the second tire pressure from the second hubcap.

The foregoing features and elements may be combined in various combinations without exclusivity, unless expressly indicated otherwise. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the figures, wherein like numerals denote like elements.
FIG. 1A illustrates a wheel for a main landing gear assembly including a hubcap monitoring tire pressure, in accordance with various embodiments;
FIG. 1B illustrates a wheel for a nose landing gear assembly including a hubcap monitoring tire pressure, in accordance with various embodiments;
FIG. 2A illustrates a hubcap to receive a tire pressure measurement and transmit the tire pressure measurement, in accordance with various embodiments;
FIG. 2B illustrates a hubcap to receive a tire pressure measurement and transmit the tire pressure measurement, in accordance with various embodiments;
FIG. 3 illustrates a tire pressure sensor for use with a hubcap to measure tire pressure, in accordance with various embodiments;
FIG. 4 illustrates an axel telemetry unit for use with a hubcap to measure tire pressure, in accordance with various embodiments; and
FIG. 5 illustrates a system for monitoring or measuring tire pressure in an aircraft, in accordance with various embodiments.

### DETAILED DESCRIPTION

The detailed description of exemplary embodiments herein makes reference to the accompanying drawings, which show exemplary embodiments by way of illustration. While these exemplary embodiments are described in sufficient detail to enable those skilled in the art to practice the inventions, it should be understood that other embodiments may be realized and that logical changes and adaptations in design and construction may be made in accordance with this invention and the teachings herein. Thus, the detailed description herein is presented for purposes of illustration only and not of limitation. The scope of the invention is defined by the appended claims. For example, the steps recited in any of the method or process descriptions may be executed in any order and are not necessarily limited to the order presented.

Furthermore, any reference to singular includes plural embodiments, and any reference to more than one component or step may include a singular embodiment or step. Also, any reference to attached, fixed, connected or the like may include permanent, removable, temporary, partial, full and/or any other possible attachment option. Additionally, any reference to without contact (or similar phrases) may also include reduced contact or minimal contact. Surface shading lines may be used throughout the figures to denote different parts but not necessarily to denote the same or different materials.

As used herein, "distal" refers to the direction radially outward, or generally, away from the axis of rotation of a wheel. As used herein, "proximal" refers to a direction radially inward, or generally, towards the axis of rotation of a wheel.

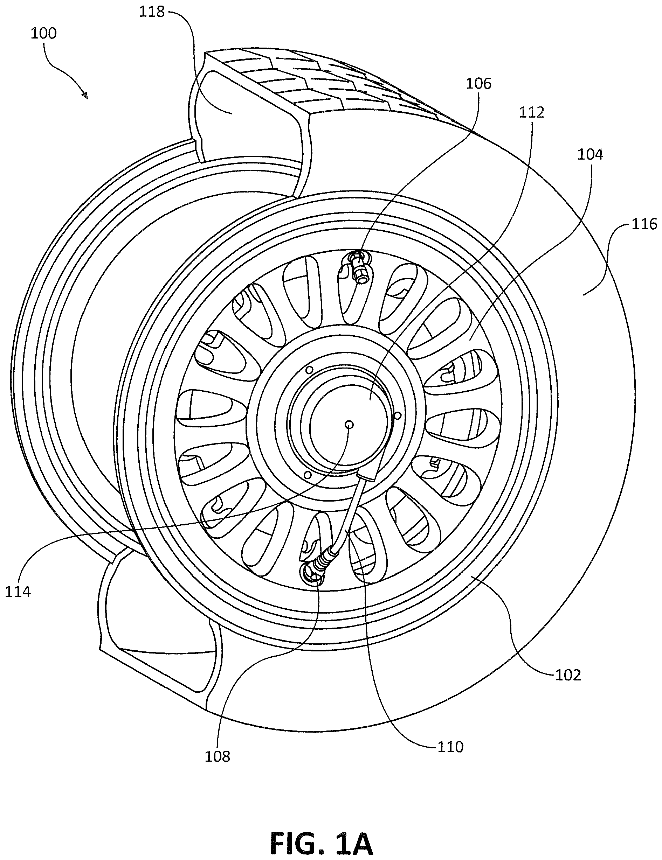

FIG. 1A illustrates a wheel for a main landing gear assembly including a hubcap monitoring tire pressure, according to various embodiments. Wheel 100 includes lip 102 around a distal circumference of the wheel 100. Spokes 104 connect lip 102 to the center bore of wheel 100. Valve stem 106 protrudes through an opening in wheel 100 for filling tires with air and checking tire pressure using a manual gage. Tire pressure sensor (TPS) 108 may attach to wheel 100 to take an electronic measurement of tire pressure in chamber 118 between wheel 100 and a tire 116 mounted on wheel 100. TPS 108 is electrically connected through conduit 110 to hubcap 112. Conduit 110 may include wires. The wires of conduit 110 may be in a twisted pair configuration, for example. Hubcap 112 may include transmission device 114. For example, transmission device 114 may be an infrared light-emitting diode (IR LED), USB port, wireless transponder, or other communication device.

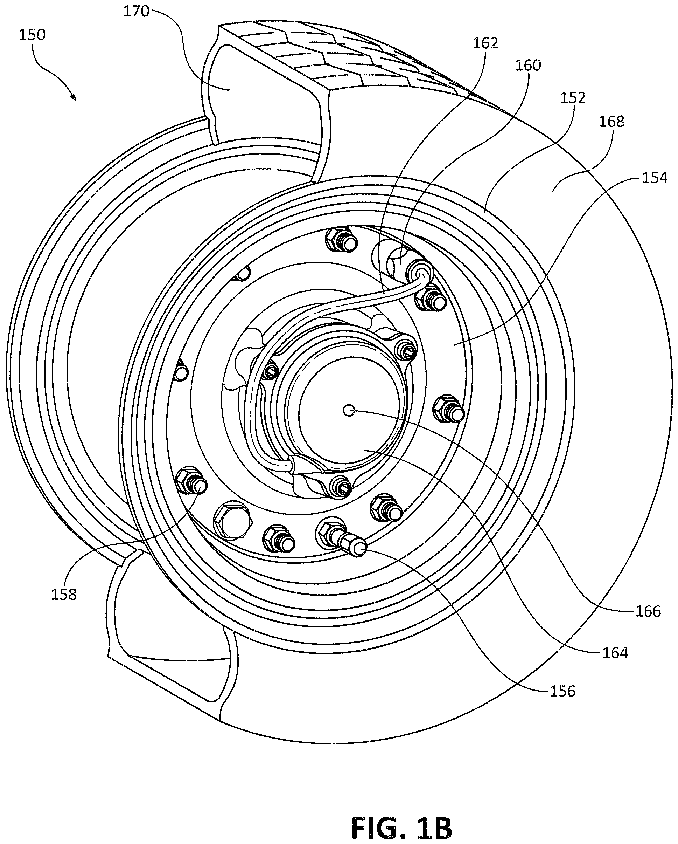

FIG. 1B illustrates a wheel for a nose landing gear assembly including a hubcap, according to various embodiments. Wheel 150 includes lip 152. Face 154 of wheel 150 connects lip 152 to the center bore of wheel 150. Valve stem 156 protrudes through an opening in wheel 150 for filling tires with air and checking tire pressure using manual gauges. Bolts 158 attach wheel 150 to an axle. TPS 160 may attach to wheel 150 to take an electronic measurement of tire pressure in chamber 170 between wheel 150 and a tire 168 mounted to wheel 150. TPS 160 is electrically connected through conduit 162 to hubcap 164. Conduit 162 may include wires. The wires of conduit 162 may be in a twisted pair configuration, for example. Hubcap 164 may include transmission device 166. For example, transmission device 166 may be an infrared LED, USB port, wireless transponder, or other communication device.

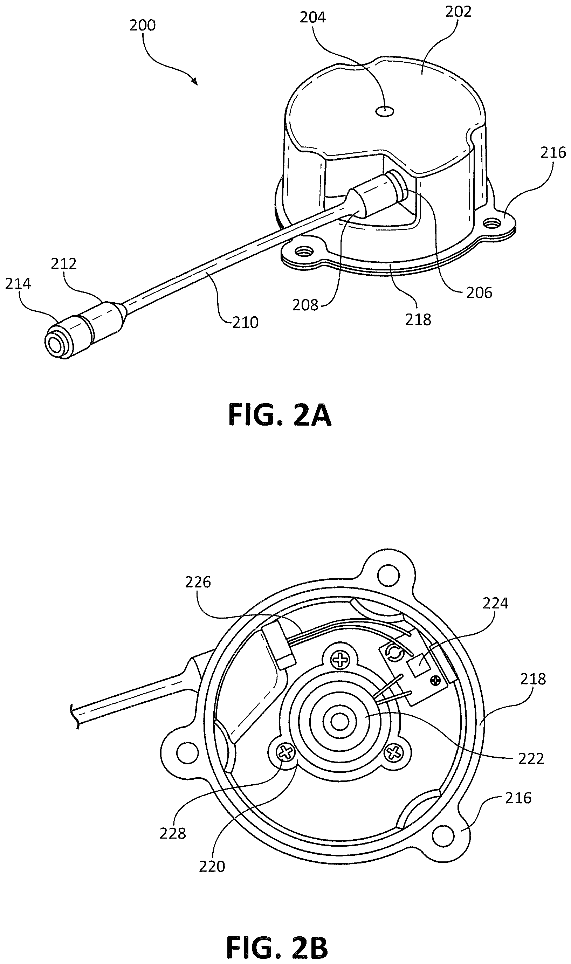

FIG. 2A is a perspective view of an exemplary hubcap to receive a tire pressure measurement and transmit the tire pressure measurement, in accordance with various embodiments. Hubcap 200 includes casing 202. Casing 202 may be made of metals, plastics, ceramics, or other materials to provide environmental protection. Casing 202 further includes transmission device 204 that may serve as a communication interface. For example, transmission device 204 may be an infrared LED shining through a window on a top surface of hubcap 200 that is transparent or translucent to infrared waves. Transmission device 204 may also be a USB port, wireless transponder, or other type of communication method. Casing 202 includes interface 206 to connect to interface 208 of conduit 210. For example, conduit 210 may be wires surrounded by insulation. Conduit 210 includes interface 212 to mate with TPS 214. TPS 214 takes an electronic measurement of tire pressure and sends the electronic measurement through conduit 210 to hubcap 200. Hubcap 200 may be attached to a wheel by mounting points 216 on rim 218 of casing 202. Hubcap 200 may rotate with the wheel to which it is mounted.

FIG. 2B illustrates a back side of a hubcap to receive a tire pressure measurement and transmit the tire pressure measurement, in accordance with various embodiments. Hubcap 200 may include tank 220 fastened to hubcap 200 by fasteners 228. Tank 220 includes a capacitor and a coil 222. Coil 222 may be an electrical input to hubcap 200. Coil 222 may be a ferrite wound coil. Coil 222 may be electrically connected to circuit 224, which includes at least one capacitor. Leads 226 electrically connect circuit 224 through conduit 210 to TPS 214.

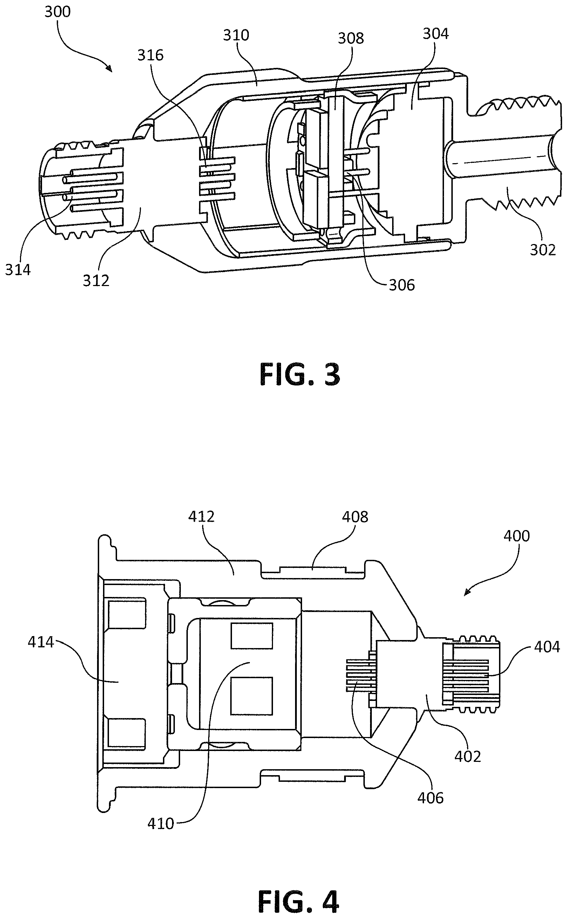

FIG. 3 illustrates an exemplary TPS 300 for use with a hubcap to measure tire pressure, in accordance with various embodiments. TPS 300 includes pressure fitting 302. Pressure fitting 302 interfaces to fluidly connect TPS 300 to the chamber between the tire and the wheel. TPS 300 also includes a transducer 304 to convert pressure into an electrical signal. Leads 306 electrically connect transducer 304 to circuit card assembly ("CCA") 308. CCA 308 is electrically connected to pins 316 of connector 312. Connector 312 has external pins 314 to electrically connect to an interface of a conduit.

FIG. 4 illustrates an exemplary axel telemetry unit (ATU) 400 for use with a hubcap to communicate tire pressure, in accordance with various embodiments. ATU 400 includes connector 402. Connector 402 includes external pins 404 and internal pins 406. Internal pins are electrically connected to tank 410. EMI gasket 408 electrically connects ATU 400 from its supporting structure and shields ATU 400 from electromagnetic interference. Housing 412 surrounds ATU 400 and environmentally protects ATU 400. Coil wound in ferrite 414 is electrically connected to tank 410. Coil wound in ferrite 414 faces outward from a center bore of a wheel and hubcap 200 is mounted over coil wound in ferrite with coil 222 (from FIG. 2B) adjacent to coil wound in ferrite 414 to allow the signal from spinning hubcap 200 (from FIG. 2A) to transmit into ATU 400 that is stationary or spinning at a different angular velocity.

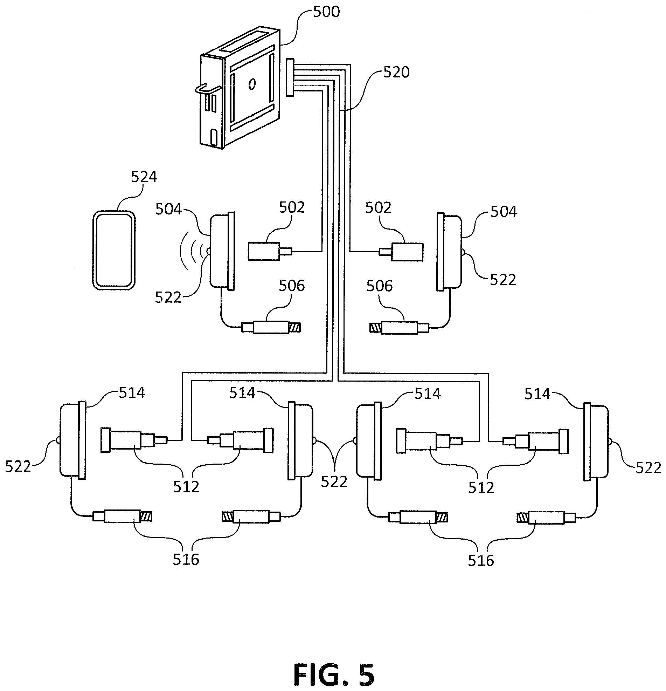

FIG. 5 illustrates a system for monitoring or measuring tire pressure in an aircraft, in accordance with various embodiments. The system illustrates an aircraft with two wheels on each of three sets of landing gear, but other configurations and numbers are possible. The system includes a brake control unit (BCU) 500. Each wheel on the nose gear includes an ATU 502 electrically coupled to the BCU 500 by wires 520. ATU 502 is in electromagnetic communication with a nose gear hubcap 504. Nose gear hubcap 504 is electrically connected to TPS 506. The tire pressure is measured by TPS 506 and an electrical signal detailing the measurement flows through a coil in nose gear hubcap 504. The coil in nose gear hubcap 504 may be adjacent a coil in ATU 502 so that the signal from TPS 506 may transfer through the respective nose gear hubcap 504 into ATU 502 by induction or other electromagnetic communication. The tire pressure signal from TPS 506 may also flow through a respective IR LED 522 in nose gear hubcap 504 to transmit the tire pressure to a wireless capable device 524. Wireless capable device 524 may include, for example, a smartphone, tablet, or dedicated pressure reading device. Wireless capable device 524 may be configured to display a graphical representation of the tire pressures throughout the system.

In various embodiments, the system also includes main gear components. Each main gear wheel may have a corresponding wheel speed transducer (WST) 512. WST may be in electromagnetic communication with main gear hubcap 514. Main gear hubcap 514 is electrically coupled to TPS 516. The tire pressure is measured by TPS 516 and an electrical signal detailing the measurement flows through a coil in main gear hubcap 514. The coil in main gear hubcap is adjacent a coil in WST 512 so that the signal from TPS 516 may transfer through main gear hubcap 514 into WST 512 by induction or other electromagnetic communication. The tire pressure signal from TPS 516 may also flow through an IR LED in main gear hubcap 514 to transmit the tire pressure to wireless capable device 524.

In various embodiments, tire pressure data from all wheels may be sent to one or more location on the exterior of the aircraft for transmission, such as a nose gear hubcap 504 or a main gear hubcap 514. For example, the tire pressure signal from TPS 516 measuring a main gear tire pressure may be sent to nose gear hubcap 504 by a direct signal through BCU 500 or by wireless transmission. Wireless capable device 524 may then read the tire pressure of main gear at the nose gear hubcap 504. Similarly, nose gear tire pressure may be measured by TPS 506 and sent from nose gear hubcap 504 to main gear hubcap 514. Main gear hubcap 514 may then transmit the tire pressure of a nose gear wheel measured by TPS 506. As a further example, TPS 506 may measure the tire pressure on the left nose gear wheel and send the measurement through the left nose gear hubcap 504 to the right nose gear hubcap 504. IR LED 522 on the right nose gear hubcap 504 may then transmit the pressure measurement from the left TPS 506. Thus, any tire pressure measurement from any tire on the aircraft may be sent to any main gear hubcap 514 or nose gear hubcap 504 and transmitted by an IR LED 522. A single nose gear hubcap 504 or main gear hubcap 514 may transmit the tire pressure measurements taken by each of TPS 506 or TPS 516.

Other wireless protocols may also be used to transmit tire pressure from nose gear hubcap 504 or main gear hubcap 514 to wireless capable device 524 or other devices, for example, a wireless Ethernet network (e.g., an ad hoc network utilizing IEEE 802.11a/b/g/n/ac), a wireless communications protocol using short wavelength UHF radio waves and defined at least in part by IEEE 802.15.1 (e.g., the BLUETOOTH protocol maintained by Bluetooth Special Interest Group), a low power wireless protocol such as Bluetooth Smart, inductive coupling, near field communication (NFC), or other radio frequency (RF) signals.

## Claims

1. A system for measuring tire pressure on an aircraft, comprising:
a first wheel (100; 150) including a first tire pressure;
a first tire pressure sensor (108; 160; 214; 300; 506; 516) on the first wheel (100; 150) configured to output a first electronic measurement of the first tire pressure;
a first transmission device (114; 166; 204) electrically coupled to the first tire pressure sensor (108; 160; 214; 300; 506; 516) and configured to transmit the first electronic measurement, and further comprising:
a second wheel (100; 150) including a second tire pressure;
a second tire pressure sensor (108; 160; 214; 300; 506; 516) on the second wheel (100; 150) configured to output a second electronic measurement of the second tire pressure; and
a first hubcap (112; 164; 200; 504; 514) at a proximal region of the first wheel (100; 150), **characterized in that** the first hubcap (112; 164; 200; 504; 514) is configured to receive the second electronic measurement of the second tire pressure.

2. The system of claim 1, further comprising a hubcap (112; 164; 200; 504; 514) at a proximal region of the first wheel (100; 150), wherein the first transmission device (114; 166; 204) is mounted to the hubcap (112; 164; 200; 504; 514).

3. The system of claim 2, further including an axle telemetry unit (400; 502), wherein the axle telemetry unit (400; 502) is in electromagnetic communication with the hubcap (112; 164; 200; 504; 514).

4. The system of claim 1, 2 or 3, wherein the first transmission device (114; 166; 204) is an infrared light-emitting diode.

5. The system of claim 1, wherein:
the first wheel (150) is mounted on a nose gear assembly; and
the second wheel (100) is mounted on a main gear assembly.

6. The system of claim 5 , further comprising:
a second hubcap (112; 164; 200; 504; 514) at a proximal region of the second wheel (100; 150), wherein the second hubcap (112; 164; 200; 504; 514) is configured to receive the first electronic measurement of the first tire pressure; and
a second transmission device (114; 166; 204) on the second hubcap (112; 164; 200; 504; 514) and configured to transmit the second electronic measurement.

7. The system of claim 7, wherein the second transmission device (114; 166; 204) is configured to transmit the first electronic measurement.

8. The system of any preceding claim, wherein the first transmission device (166) is mounted to a nose gear assembly.

9. The system of any preceding claim, further including an infrared capable device configured to receive the first electronic measurement.

10. A hubcap (112; 164; 200; 504; 514) for an aircraft, comprising:
a coil (222; 414) disposed on a first surface of the hubcap (112; 164; 200; 504; 514) and configured to receive a tire pressure; **characterised in that** said hubcap (112; 164; 200; 504; 514) comprises further a communication interface disposed on a second surface of the hubcap (112; 164; 200; 504; 514) and electrically connected to the coil (222; 414), and wherein the coil (222; 414) is configured to receive a second tire pressure from a second hubcap (112; 164; 200; 504; 514).

11. The hubcap of claim 10, wherein the communication interface further comprises an infrared light-emitting diode.

12. The hubcap of claim 10 or 11, wherein the communication interface comprises a wireless communication interface.

13. The hubcap of any of claims 10 to 12, wherein the communication interface is configured to output the tire pressure.

## Patentansprüche

1. System zum Messen des Reifendrucks an einem Flugzeug, wobei das System Folgendes umfasst:
ein erstes Rad (100; 150), das einen ersten Reifendruck beinhaltet;
einen ersten Reifendrucksensor (108; 160; 214; 300; 506; 516) am ersten Rad (100; 150), der dazu konfiguriert ist, einen ersten elektronischen Messwert des ersten Reifendrucks auszugeben;
eine erste Übertragungsvorrichtung (114; 166; 204), die elektrisch an den ersten Reifendrucksensor (108; 160; 214; 300; 506; 516) gekoppelt ist und dazu konfiguriert ist, den ersten elektronischen Messwert zu übertragen, und ferner umfassend:
ein zweites Rad (100; 150), das einen zweiten Reifendruck beinhaltet;
einen zweiten Reifendrucksensor (108; 160; 214; 300; 506; 516) am zweiten Rad (100; 150), der dazu konfiguriert ist, einen zweiten elektronischen Messwert des zweiten Reifendrucks auszugeben; und
eine erste Radkappe (112; 164; 200; 504; 514) in einem proximalen Bereich des ersten Rads (100; 150), **dadurch gekennzeichnet, dass**
die erste Radkappe (112; 164; 200; 504; 514) dazu konfiguriert ist, den zweiten elektronischen Messwert des zweiten Reifendrucks zu empfangen.

2. System nach Anspruch 1, ferner umfassend eine Radkappe (112; 164; 200; 504; 514) in einem proximalen Bereich des ersten Rads (100; 150), wobei die erste Übertragungsvorrichtung (114; 166; 204) an der Radkappe (112; 164; 200; 504; 514) montiert ist.

3. System nach Anspruch 2, ferner beinhaltend eine Achsen-Telemetrie-Einrichtung (400; 502), wobei die Achsen-Telemetrie-Einrichtung (400; 502) sich in elektromagnetischer Kommunikation mit der Radkappe (112; 164; 200; 504; 514) befindet.

4. System nach Anspruch 1, 2 oder 3, wobei die erste Übertragungsvorrichtung (114; 166; 204) eine Infrarot-Leuchtdiode ist.

5. System nach Anspruch 1, wobei:
das erste Rad (150) an einer Bugfahrwerkbaugruppe montiert ist; und
das zweite Rad (100) an einer Hauptfahrwerkbaugruppe montiert ist.

6. System nach Anspruch 5, ferner umfassend:
eine zweite Radkappe (112; 164; 200; 504; 514) in einem proximalen Bereich des zweiten Rads (100; 150), wobei die zweite Radkappe (112; 164; 200; 504; 514) dazu konfiguriert ist, den ersten elektronischen Messwert des ersten Reifendrucks zu empfangen; und
eine zweite Übertragungsvorrichtung (114; 166; 204) an der zweiten Radkappe (112; 164; 200; 504; 514), die dazu konfiguriert ist, den zweiten elektronischen Messwert zu übertragen.

7. System nach Anspruch 7, wobei die zweite Übertragungsvorrichtung (114; 166; 204) dazu konfiguriert ist, den ersten elektronischen Messwert zu übertragen.

8. System nach einem der vorhergehenden Ansprüche, wobei die erste Übertragungsvorrichtung (166) an einer Bugfahrwerkbaugruppe montiert ist.

9. System nach einem der vorhergehenden Ansprüche, ferner beinhaltend eine infrarotfähige Vorrichtung, die dazu konfiguriert ist, den ersten elektronischen Messwert zu empfangen.

10. Radkappe (112; 164; 200; 504; 514) für ein Flugzeug, die Folgendes umfasst:
eine Spule (222; 414), die auf einer ersten Fläche der Radkappe (112; 164; 200; 504; 514) angeordnet ist und dazu konfiguriert ist, einen Reifendruck zu empfangen; **dadurch gekennzeichnet, dass** die Radkappe (112; 164; 200; 504; 514) ferner eine Kommunikationsschnittstelle umfasst, die auf einer zweiten Fläche der Radkappe (112; 164; 200; 504; 514) angeordnet ist und elektrisch mit der Spule (222; 414) verbunden ist, und wobei die Spule (222; 414) dazu konfiguriert ist, einen zweiten Reifendruck von einer zweiten Radkappe (112; 164; 200; 504; 514) zu empfangen.

11. Radkappe nach Anspruch 10, wobei die Kommunikationsschnittstelle ferner eine Infrarot-Leuchtdiode umfasst.

12. Radkappe nach Anspruch 10 oder 11, wobei die Kommunikationsschnittstelle eine drahtlose Kommunikationsschnittstelle umfasst.

13. Radkappe nach einem der Ansprüche 10 bis 12, wobei die Kommunikationsschnittstelle dazu konfiguriert ist, den Reifendruck auszugeben.

## Revendications

1. Système de mesure de la pression de pneu sur un aéronef, comprenant :
une première roue (100 ; 150) incluant une première pression de pneu ;
un premier capteur de pression de pneu (108 ; 160 ; 214 ; 300 ; 506 ; 516) sur la première roue (100 ; 150) configuré pour produire une première mesure électronique de la première pression de pneu ;
un premier dispositif de transmission (114 ; 166 ; 204) couplé électriquement au premier capteur de pression de pneu (108 ; 160 ; 214 ; 300 ; 506 ; 516) et configuré pour transmettre la première mesure électronique, et comprenant en outre :
une seconde roue (100 ; 150) incluant une seconde pression de pneu ;
un second capteur de pression de pneu (108 ; 160 ; 214 ; 300 ; 506 ; 516) sur la seconde roue (100 ; 150) configuré pour produire une seconde mesure électronique de la seconde pression de pneu ; et
un premier enjoliveur (112 ; 164 ; 200 ; 504 ; 514) dans une région proximale de la première roue (100 ; 150), **caractérisé en ce que** le premier enjoliveur (112 ; 164 ; 200 ; 504 ; 514) est configuré pour recevoir la seconde mesure électronique de la seconde pression de pneu.

2. Système selon la revendication 1, comprenant en outre un enjoliveur (112 ; 164 ; 200 ; 504 ; 514) dans une région proximale de la première roue (100 ; 150), dans lequel le premier dispositif de transmission (114 ; 166 ; 204) est monté sur l'enjoliveur (112 ; 164 ; 200 ; 504 ; 514).

3. Système selon la revendication 2, incluant en outre une unité de télémétrie d'essieu (400 ; 502), dans lequel l'unité de télémétrie d'essieu (400 ; 502) est en communication électromagnétique avec l'enjoliveur (112 ; 164 ; 200 ; 504 ; 514).

4. Système selon la revendication 1, 2 ou 3, dans lequel le premier dispositif de transmission (114 ; 166 ; 204) est une diode électroluminescente infrarouge.

5. Système selon la revendication 1, dans lequel :
la première roue (150) est montée sur un train d'atterrissage avant ; et
la seconde roue (100) est montée sur un train d'atterrissage principal.

6. Système selon la revendication 5, comprenant en outre :
un second enjoliveur (112 ; 164 ; 200 ; 504 ; 514) dans une région proximale de la seconde roue (100 ; 150), dans lequel le second enjoliveur (112 ; 164 ; 200 ; 504 ; 514) est configuré pour recevoir la première mesure électronique de la première pression de pneu ; et
un second dispositif de transmission (114 ; 166 ; 204) sur le second enjoliveur (112 ; 164 ; 200 ; 504 ; 514) et configuré pour transmettre la seconde mesure électronique.

7. Système selon la revendication 7, dans lequel le second dispositif de transmission (114 ; 166 ; 204) est configuré pour transmettre la première mesure électronique.

8. Système selon l'une quelconque des revendications précédentes, dans lequel le premier dispositif de transmission (166) est monté sur un train d'atterrissage avant.

9. Système selon l'une quelconque des revendications précédentes, incluant en outre un dispositif compatible infrarouge configuré pour recevoir la première mesure électronique.

10. Enjoliveur (112 ; 164 ; 200 ; 504 ; 514) pour un aéronef, comprenant :
une bobine (222 ; 414) placée sur une première surface de l'enjoliveur (112 ; 164 ; 200 ; 504 ; 514) et configurée pour recevoir une pression de pneu ; **caractérisé en ce que** ledit enjoliveur (112 ; 164 ; 200 ; 504 ; 514) comprend en outre
une interface de communication placée sur une seconde surface de l'enjoliveur (112 ; 164 ; 200 ; 504 ; 514) et connecté électriquement à la bobine (222 ; 414), et dans lequel
la bobine (222 ; 414) est configurée pour recevoir une seconde pression de pneu d'un second enjoliveur (112 ; 164 ; 200 ; 504 ; 514).

11. Enjoliveur selon la revendication 10, dans lequel l'interface de communication comprend en outre une diode électroluminescente infrarouge.

12. Enjoliveur selon la revendication 10 ou 11, dans lequel l'interface de communication comprend une interface de communication sans fil.

13. Enjoliveur selon l'une quelconque des revendications 10 à 12, dans lequel l'interface de communication est configurée pour produire la pression de pneu.
